# EUROPEAN PATENT SPECIFICATION

(11) **EP 2 547 193 B1**
(45) Date of publication and mention of the grant of the patent: **01.03.2017**
(21) Application number: 10848076.5
(22) Date of filing: 18.03.2010
(51) Int. Cl.: A01D 34/84, A01D 34/00, A01D 43/16

(54) **ROBOTIC LAWN MOWER WITH EDGE CUTTING**
ROBOTISCHER RASENMÄHER MIT KANTENSCHNITT
TONDEUSE À GAZON ROBOTISÉE POURVUE DE PARTIES TRANCHANTES

(43) Date of publication of application: 23.01.2013
(73) Proprietor: Husqvarna AB, 561 82 Huskvarna (SE)
(72) Inventor: JÄGENSTEDT, Patrik, 560 27 Tenhult (SE); ELONSSON, Martin, 561 92 Huskvarna (SE); AHLIN, Peter, 554 45 Jönköping (SE); GUSTAVSSON, Christer, 553 08 Jönköping (SE); VAN DE GRIENDT, Antoine, 1251 Rb Laren (BE); HALLIN, Peter, 566 34 Habo (SE)
(86) International application number: PCT/SE2010/050300
(87) International publication number: WO 2011/115536

(56) References cited:
- EP-A1- 1 745 686
- US-A- 3 550 714
- US-A- 3 698 523
- US-A- 5 572 856
- US-A- 5 572 856
- US-A1- 2003 070 408
- US-A1- 2003 070 408
- US-A1- 2007 294 991
- US-A1- 2009 254 218
- US-A1- 2009 254 218
- BATES, D. ET AL. FINAL REPORT - THE OHIO UNIVERSITY AUTONOMOUS LAWNMOWER, [Online] 2009, Retrieved from the Internet: <URL:http://www.ion.org/satdiv/alc/reports2 009/report_ohio_university_2009.pdf> [retrieved on 2010-11-30]

## Description

### Technical Field

The present invention relates to a self-propelled robotic lawnmower. Specifically, the present invention relates to a self-propelled robotic lawnmower with an edge cutting system.

### Background

Currently a number of self-propelled robotic lawnmowers are available on the market and are able to cut the vegetation/grass in areas with complicated geometric shapes. Typically, while operating within a limited area, a self-propelled robotic lawnmower uses various electrical and/or magnetic signals generated by a perimeter wire to navigate in the limited area. In response to a sensed signal indicating proximity of the perimeter wire, the robotic lawnmower may rotate at an angle and change the direction of motion. In addition to the perimeter wire, the robotic lawnmower may also include other types of sensors to detect an event, such as a collision with a fixed or mobile object within the limited area. Further, the robotic lawnmower may be battery operated and may move in a systematic and/or random pattern to ensure that the limited area is completely cut.

Generally, robotic lawnmowers operate unattended within the limited area, and return to a charging station for charging the battery when this is needed. In order to find their way back to the charging station, the lawnmowers might e.g. follow the perimeter wire. To avoid any damage to the cutting blades of the robotic lawnmower or any fixed or mobile objects within the limited area, the cutting blades of the robotic lawnmower are well placed within a housing of the robotic lawnmower. By placing the cutting blades within the housing of the robotic lawnmower, any injury to a body part of a person standing in the vicinity of the lawnmower can be avoided. However, the robotic lawnmower with the cutting blades placed within the housing may leave uncut edges and/or grass patches around the perimeter wire and/or other objects within the limited area. Such areas with uncut edges may include the border of the garden sheds, walls, trees, large stones, elevated fountains and the perimeter wire. These uncut edges around the perimeter wire and/or the other objects need to be cut in a conventional manner, for example by using a walk behind mower and/or an edge trimmer.

While performing edge cutting, personal safety and prevention of any kind of damage to fixed or moving objects within the limited area are important aspects when designing robotic lawnmowers. The use of fixed protruding cutting blades outside the housing of the lawnmower for the edge cutting, may damage fixed or mobile objects within the limited area.

U.S. Patent Application No. 20080109126 published on May 8, 2008 titled "Lawn Care Robot" describes an autonomous robotic lawnmower with a swath edge detector which is arranged to detect a swath edge between the cut and uncut grass. The robotic lawnmower may follow the detected swath edge and cut the grass adjacent to the lawnmower. In this case, the swath edge detector requires additional components such as a grass arranger and a complex calibration system to detect the uncut grass. US-A1-2009/0254218 discloses a lawnmower in accordance with the preamble of claim 1.

Therefore, there is a need for an autonomous robotic lawnmower to perform complete edge cutting in a safe manner. Moreover, there is a need for an improved trimming unit which is attached to the robotic lawnmower in order to perform edge cutting.

### Summary

In view of the above, it is an objective to solve or at least reduce the problems discussed above. In particular, the objective is to provide an autonomous robotic lawnmower with an improved edge cutting system.

The objective is achieved with a novel self-propelled robotic lawnmower according to claim 1. The lawnmower is arranged to cut vegetation within a limited area, and includes a body covered by a housing, a main cutting unit, which is carried by the body, and one or more trimming units also carried by the body. The trimming unit is provided to perform cutting adjacent to the lawnmower. Further, the trimming unit is arranged to automatically change between an active state and a passive state, such that in the passive state the trimming unit does not perform any cutting, and in the active state the trimming unit performs cutting.

According to claim 2, the trimming unit is also arranged to automatically move between a passive position and an active position. In the passive position the trimming unit is in the passive state and in the active position the trimming unit is in the active state. Further, according to claims 3 and 4, in the passive position the trimming unit is at least partially disposed within the housing of the lawnmower whereas it extends partially outside the housing in the active position.

According to claims 5 and 6, the trimming unit is arranged to move in an angularly or sideways manner. A trimming unit which moves angularly or sideways ensures a uniform edge cutting without any patch of uncut grass around the edges.

According to claim 7, the trimming unit is arranged to move vertically.

According to claims 8, 9 and 10, the robotic lawnmower is arranged to move in a random pattern within the limited area. In case of a lawn with complicated shapes, or if there are other fixed obstacles present within the limited area, the random pattern of movements of the robotic lawnmower insures a complete edge cutting without much hindrance.

According to claims 11, 12 and 13, the trimming unit is carried by the main cutter or the body of the lawnmower. Further, according to claims 14 and 15, the trimming unit is coupled to a main driving unit that is used to drive the main cutter or an auxiliary driving unit. Further, according to claims 16, 17and 18, the trimming unit includes harmless cutting members such as a wire member, cutter blade(s) or a reciprocal cutter. The cutting members are made of a plastic or some other suitable material in, order to avoid any injuries during operation.

According to claim 19, a method for controlling the self-propelled robotic lawnmower is described. The method includes the steps of mowing the lawnmower in a substantially straight line across the limited area, and, in response to an external event, randomly changing the direction of travel of the lawnmower. The method also includes a step of activating the trimming unit provided on the lawnmower.

According to claim 20, the step of activating the trimming unit includes changing the trimming unit from the passive state and to the active state. The trimming unit may perform edge cutting while making a sharp turn around the edges or around the other fixed or mobile objects in the limited area. Further, according to claims 21 and 22, the method for controlling a self-propelled robotic lawnmower further includes a step of deactivating the trimming unit in response to a deactivating event. The step of deactivating includes changing the trimming unit from the active state and to the passive state.

According to claim 23, the method for controlling a self-propelled robotic lawnmower includes automatically changing the trimming unit between the passive position and the active position. While changing from the active position to the passive position the trimming unit is arranged to change from the active state to the passive state.

### Brief Description of the Drawings

The invention will in the following be described in more detail with reference to the enclosed drawings, wherein:
FIG. 1 is a schematic view of a robotic lawnmower, according to an embodiment of the present invention;
FIG. 2A is a schematic view of a robotic lawnmower, according to another embodiment of the present invention;
FIG. 2B is another schematic view of a robotic lawnmower, according to another embodiment of the present invention; and
FIG. 3 is a schematic view of a robotic lawnmower, according to yet another embodiment of the present invention.
FIG 4A is a schematic side view of a robotic lawnmower, according to yet another embodiment of the invention, with the trimming unit in a passive position.
FIG 4B shows the robotic lawnmower of FIG 4A, with the trimming unit in an active position.

### Detailed Description

The present invention will be described more fully hereinafter with reference to the accompanying drawings, in which preferred embodiments of the invention are shown. This invention may, however, be embodied in many different forms. Herein, rather, these embodiments are provided so that this disclosure will be thorough and complete, and will fully convey the scope of the invention to those skilled in the art. In the drawings, like numbers refer to like references.

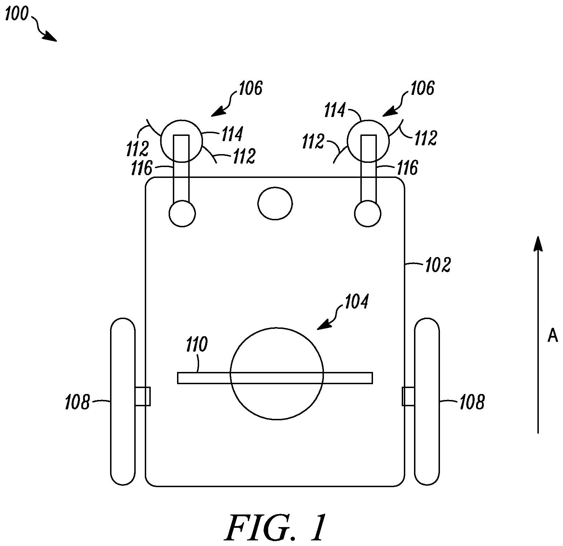

FIG. 1 is a schematic view of a self-propelled robotic lawnmower 100, according to an example embodiment of the present invention. Although the example embodiment is shown to be used in conjunction with self-propelled robotic lawnmowers, it should be understood that the present invention could be incorporated into any suitable type of autonomous outdoor equipment and is not limited to use merely in self-propelled robotic lawnmowers, and may be incorporated in different types of embodiments. In addition, any suitable size, shape or type of elements or materials could be used. In an embodiment of the present invention, the robotic lawnmower 100 may be powered by a main power source (not shown in the figures), for example but not limited to, an electric motor which may be driven by one or more rechargeable batteries, a pneumatic or hydraulic drive, a fuel cell etc. The rechargeable batteries may be charged by electrical energy using a charger, solar energy via a solar panel, or a combination of both.

The robotic lawnmower 100 includes a body 102, a main cutting unit 104 and one or more trimming units 106. In an embodiment of the present invention, the main cutting unit 104 and the trimming units 106 are carried by the body 102. The body 102 may be of a monolithic or a multi-part articulating configuration and covered by a housing (not shown). As shown in FIG. 1, the trimming units 106 are mounted substantially towards a front portion of the robotic lawnmower 100 with respect to a direction of travel A. However, in another embodiment of the present invention, the trimming units 106 may be mounted towards a sideway or a rear portion of the robotic lawnmower 100. Further, the robotic lawnmower 100 may include a collector (not shown in the figures) which is used to collect the cut vegetation/grass. In various other configurations, the robotic lawnmower 100 may also include a handle (not shown in the figures) to aid in manual lifting of the robotic lawnmower 100 in a non-operational state. The robotic lawnmower 100 may also include a control device (not shown in the figures) which may have a processor, a memory (e.g., ROM, RAM, flash memory etc.) etc. The control device may manoeuvre the robotic lawnmower 100 within the limited area such that the lawnmower performs cutting in an autonomous manner without any supervision. As shown in FIG. 1, the robotic lawnmower 100 may be driven by two drive wheels 108 and one or more following wheels (e.g. a caster wheel, not shown). As shown in FIG. 1, the drive wheels 108 are mounted substantially towards a rear portion of the robotic lawnmower. Other configurations of the drive wheels 108 and the one or more following wheels are possible without departing from the essence of the present invention.

In an embodiment of the present invention, the robotic lawnmower 100 is configured to cut vegetation within a limited area. The limited area may be any terrain with vegetation, such as lawns, gardens, yards, golf courses, fields, or the like. In an embodiment of the present invention, the limited area may be demarcated by a perimeter wire (not shown). The perimeter wire may be fixed above the ground or embedded under the ground and connected to a signal generator energized by a power supply or directly connected to the power supply. The perimeter wire may also form loops around areas within the limited area where cutting is not desired, for example but not limiting to, fixed objects like garden sheds, trees, walls, large stones, bushes or shrubs, flower or vegetable patches, elevated fountains etc. Such loops are referred to as perimeter wire islands.

In an embodiment of the present invention, the robotic lawnmower 100 may be provided with one or more onboard sensors (not shown) to detect an electrical and/or magnetic signal originating from the perimeter wire. The one or more onboard sensors may include, for example, but not limited to, current sensors and/or magnetic field sensors. The one or more onboard sensors may be mounted in different positions on the robotic lawnmower 100 and are able to sense the distance and/or orientation of the robotic lawnmower 100 with reference to the perimeter wire. With the help of these one or more sensors and the control device, the robotic lawnmower 100 may navigate within the limited area.

In another embodiment of the present invention, the robotic lawnmower 100 may systematically follow the perimeter wire in order to locate the charger within the limited area. Further, in various other embodiments of the present invention, one or more collision or proximity detectors (e.g. infrared detectors) may also be mounted on the robotic lawnmower 100 such that the robotic lawnmower 100 may detect unexpected obstacles. The one or more collision or proximity detectors may assure that the robotic lawnmower 100 steer away or stop in anticipation of a collision. In another embodiment of the present invention, instead of a perimeter wire, localized perimeter co-ordinates of the limited area may be used to navigate the robotic lawnmower 100. The perimeter co-ordinates of the limited area may be stored in the memory accessible of the control device of the robotic lawnmower 100 or in a remote location accessible by the control device. The robotic lawnmower 100 may use the perimeter co-ordinates in combination with a localised positioning system to navigate within the limited area. It is apparent to a person of ordinarily skill in the art that the robotic lawnmower 100 may be manoeuvred by any other known methods and systems.

As shown in FIG. 1, the main cutting unit 104 includes a rotary cutter 110. However, in various other embodiments of the present invention, the main cutting unit 104 may include a cylindrical or reel cutter. The rotary cutter 110 may be made of metal, plastic, or the like. The rotary cutter 110 may also include design modifications and/or attachments to perform various functions, such as, mulching, controlling the trajectory of the cut vegetation, aerating, digging etc. In certain embodiments of the present invention, the main cutting unit 104 may include a wire or filament cutter instead of a rotary cutter 110. In an embodiment of the present invention, the rotary cutter 110 may be connected to a main driving unit (not shown in the figures) such that the main driving unit may rotate the rotary cutter 110 via a transmission means, for example but not limiting to, gears, belt and pulley, linkages, a frictional drive or a combination of these. In yet another embodiment of the present invention, the rotary cutter 110 may be vertically adjustable such that it can be lowered or raised in order to vary a depth of cut.

In an embodiment of the present invention, each of the trimming units 106 may include at least one cutting means 112, a cutting means carrier 114 and a supporting member 116. In various embodiments of the present invention, the at least one cutting means 112 may be a wire member, a cutter blade or a reciprocal cutter. The cutting means 112 may be made of metal, plastics, or the like. The cutting means carrier 114 may be connected to the supporting member 116 by a fixed joint or a movable joint. In an embodiment of the present invention, the movable joint between the cutting means carrier 114 and the supporting member 116 enables the cutting means carrier 114 to move in various orientations with respect to the supporting member 116. Further, the supporting member 116 may be attached to the body 102 by a fixed or a movable connection, for example but not limiting to, a pivoting joint, a universal joint, a prismatic joint, a cylindrical joint etc. In an embodiment of the present invention, the trimming units 106 may be coupled to the main driving unit. In another embodiment of the present invention, the trimming units 106 may be coupled to an auxiliary driving unit (not shown). The auxiliary driving unit may be directly driven by the main power source of the robotic lawnmower 100.

In an embodiment of the present invention, the trimming units 106 are arranged to change between a passive state and an active state. In the passive state, the trimming units 106 may not perform any cutting, whereas in the active state the trimming units 106 may perform cutting. The cutting means 112 of the trimming units 106 may be driven by the main driving unit or the auxiliary driving unit, and are arranged to perform cutting adjacent to the body 102 of the robotic lawnmower 100. In an embodiment of the present invention, when the robotic lawnmower 100 senses the perimeter wire or the perimeter wire islands, the trimming units 106 may change to the active state. This may allow the trimming units 106 to perform edge cutting in the proximity of the perimeter wire or the perimeter wire islands within the limited area. As described above, the robotic lawnmower 100 may follow the perimeter wire to the charger, and a portion of the perimeter of the limited area is covered by the robotic lawnmower 100. In another embodiment of the present invention, while the robotic lawnmower 100 follows the perimeter wire, edge cutting in the proximity of the portion of the perimeter wire is completed. As during the normal operating conditions the robotic lawnmower 100 may repeatedly follow the perimeter wire and effective edge cutting is achieved.

In another embodiment of the present invention, the trimming units 106 may be arranged to move angularly and/or sideways or vertically. As described above, the supporting members 116 of the trimming units 106 are attached to the body 102 by a movable connection. This assists the angular and/or sideways or vertical movement of the trimming units 106. In an alternative embodiment of the present invention, an ancillary driving mechanism may be provided in order to enable the angular and/or sideways or vertical movement of the trimming units 106. In an embodiment of the present invention, the ancillary driving mechanism may include a motor assisted mechanism to transmit angular and/or sideways or vertical movement to the trimming units 106. In various other embodiments the ancillary driving mechanism may be driven by the main driving unit or the auxiliary driving unit. Whenever the trimming units 106 are changed to the active state in response to an external event, such as sensing the perimeter wire and/or sensing the perimeter loop, the ancillary driving mechanism may also be activated. Hence, the angular and/or sideways or vertical movement of the trimming units 106 along with the rotational or reciprocal movement of the cutting means 112 ensures a uniform edge cutting.

In an embodiment of the present invention, the robotic lawnmower 100 is arranged to travel in a random pattern within the limited area. In another embodiment of the present invention, the robotic lawnmower 100 may randomly change the direction of movement in response to an external event. The external event may include a collision with an obstacle (e.g. sheds, trees, fountain, and stones), sharp turns at corners in addition to sensing the perimeter wire and/or the perimeter loop. In another embodiment of the present invention, the trimming units 106 may change from the passive state to the active state in response to the external event. The robotic lawnmower 100 moving randomly within the limited area may provide edge cutting around the obstacles, sharp turn corners and the perimeter islands.

Further, in an embodiment of the present invention, while the robotic lawnmower 100 is arranged to travel in the random pattern within the limited area a deactivating event may change the trimming unit 106 from the active state to the passive state. The deactivating event may include collision free systematic movement of the robotic lawnmower 100, absence of the obstacle/corners, a substantial distance from the perimeter wire etc.

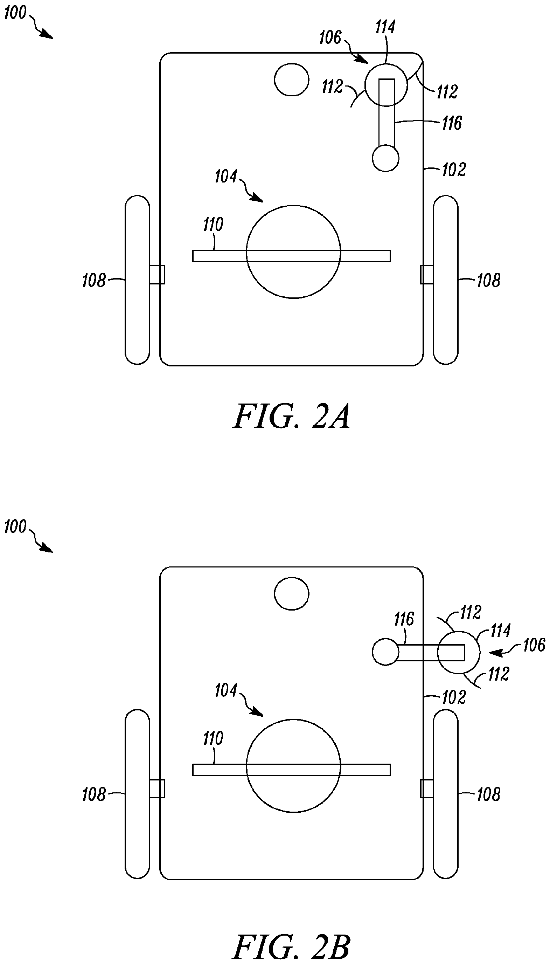

FIG. 2A is a schematic view of a robotic lawnmower 100, according to another embodiment of the present invention. In FIG. 2A, the trimming unit 106 is partially disposed within the housing of the robotic lawnmower 100 and the trimming unit 106 is in the passive state. While disposed within the housing the trimming unit 106 is in a position which is hereinafter referred to as a passive position. In the passive position the trimming unit 106 may avoid bushes, branches and other random objects, such that any damage to the trimming unit 106 is prevented. Further, in the passive position the trimming unit 106 may increase the manoeuvrability of the robotic lawnmower 100.

During a normal operation the trimming unit 106 may stay in the passive position, and in case of the external event, for example, sensing the perimeter wire and/or perimeter wire island, switch to an active position. Iin FIG. 2B, the trimming unit 106 is in the active position, i.e. partially outside the housing of the robotic lawnmower 100. In the active position the trimming unit 106 may change from the passive state to the active state and perform edge cutting. In an embodiment of the present invention, the movable joint between the supporting member 116 and the body 102 may have an auxiliary mechanism, for example a motor assisted and/or spring biased lever or bar member to move the trimming unit 106 from the passive position to the active position. In an alternative embodiment of the present invention, the supporting member 116 may be flexibly mounted to the body 102 by means of a spring member. By providing a flexible mounting between the supporting member 116 and the body 102, the trimming unit 106 may slide along the fixed objects in the limited area, for examples bushes, fountains and large stones. In another alternative embodiment of the present invention, the supporting member 116 may be flexibly mounted to the body 102 by means of a spring member in addition to the auxiliary mechanism. While in the active position, the trimming unit may perform edge cutting and may also be flexible enough to slide along the fixed objects in order to avoid any hindrance and/or damage.

In yet another embodiment of the present invention, the robotic lawnmower 100 may be arranged to travel in the random pattern while the trimming unit 106 is in the active position. The trimming unit 106 as described above is capable of performing the complete edge cutting. It is apparent to a person skilled in the art that the robotic lawnmower 100 may have one or more trimming units 106 positioned on any portion of the robotic lawnmower 100. In an embodiment of the present invention, the control device of the robotic lawnmower 100 may have stored a computer program to optimize the edge cutting and the normal cutting, based on the shape and size of the limited area.

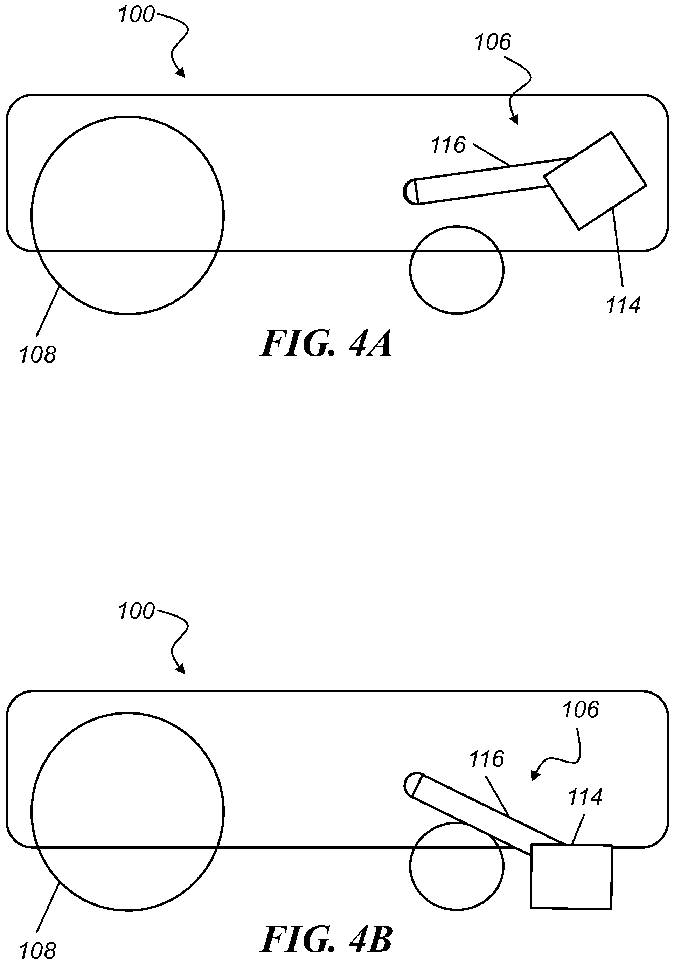

FIGS. 4A and 4B are schematic views of a robotic lawnmower 100, according to another embodiment of the present invention. According to this embodiment, the trimming unit 106 is arranged to be move vertically between a raised passive position and a lowered, active position. In FIG. 4A, the trimming unit 106 is disposed in a raised position within the housing of the robotic lawnmower 100, and the trimming unit 106 is in the passive state. In the passive position the trimming unit 106 is raised within the housing such that any damage to the trimming unit 106 is prevented. During a normal operation the trimming unit 106 may stay in the passive position, and in case of the external event, for example, sensing the perimeter wire and/or perimeter wire island, switch to an active position. In FIG. 4B, the trimming unit 106 is in the lowered active position. In the active position the trimming unit 106 may change from the passive state to the active state and perform edge cutting.

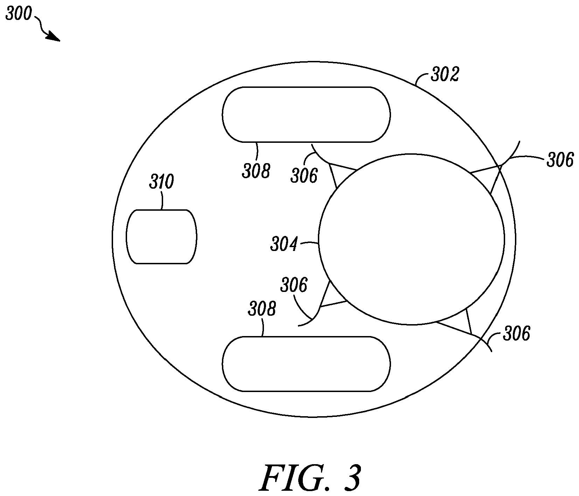

FIG. 3 is a schematic view of a self-propelled robotic lawnmower 300, according to yet another example embodiment of the present invention. The robotic lawnmower 300 includes a body 302, a main cutting unit 304 and trimming units 306. In an embodiment of the present invention, the trimming units 306 may be wire members carried by the main cutting unit 304. The trimming units 306 are arranged to perform edge cutting in an area adjacent to the robotic lawnmower 300.

The robotic lawnmower 300 may be driven by two drive wheels 308 and a tail wheel 310 (e.g. a caster wheel). Other configurations of the drive wheels 308 and the tail wheel 310 are possible without departing from the essence of the present invention. In various embodiments of the present invention, the trimming units 306 may be wire members made of metal, plastic, or the like. The robotic lawnmower 300 is configured to cut the vegetation within the limited area such that the trimming units 306 may be used for edge cutting. Further, the robotic lawnmower 300 may be arranged to move in a random pattern within the limited area. In an embodiment of the present invention, the robotic lawnmower 300 may be battery powered, using electrical energy or solar energy via a solar panel, or a combination of both. Further, any known methods and systems may be used for the navigation of the robotic lawnmower 300, for example using the perimeter wire or the local positioning system.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A self-propelled robotic lawnmower (100) which is configured to cut vegetation within a limited area during normal operation, the lawnmower comprising:
a body (102) covered by a housing;
a main cutting unit (104) carried by the body;
at least one trimming unit (106) carried by the body or the housing,
**characterized in that** the at least one trimming unit (106) is arranged to automatically change between a passive state during normal operation, wherein the trimming unit is passive and thereby not arranged to perform any cutting, and an active state, wherein the trimming unit is active and thereby arranged to perform cutting.

2. A self-propelled robotic lawnmower according to claim 1, wherein the at least one trimming unit is arranged to be automatically movable between a passive position and an active position, wherein the at least one trimming unit is in the passive state when in the passive position, and wherein the at least one trimming unit is in the active state when in the active position.

3. A self-propelled robotic lawnmower according to claim 2, wherein in the passive position the at least one trimming unit is at least partially disposed within the housing.

4. A self-propelled robotic lawnmower according to claim 2, wherein in the active position the at least one trimming unit is extended at least partially outside the housing.

5. A self-propelled robotic lawnmower according to claim 1, wherein in the active state the at least one trimming unit is arranged to move angularly.

6. A self-propelled robotic lawnmower according to claim 1, wherein in the active state the at least one trimming unit is arranged to move sideways.

7. A self-propelled robotic lawnmower according to claim 1, wherein in the active state the at least one trimming unit is arranged to move vertically.

8. A self-propelled robotic lawnmower according to claim 1, wherein the lawnmower is arranged to travel in a random pattern within the limited area.

9. A self-propelled robotic lawnmower according to claim 2, wherein the at least one trimming unit is selectively in the active position while the lawnmower is travelling in a random pattern.

10. A self-propelled robotic lawnmower according to claim 1, wherein the lawnmower is arranged to sense a perimeter wire, and in response thereto put the trimming units (106) in the active state.

11. A self-propelled robotic lawnmower according to claim 9, wherein the trimming unit is carried by the main cutting unit.

12. A self-propelled robotic lawnmower according to claim 9, wherein the trimming unit is carried by the body.

13. A self-propelled robotic lawnmower according to claim 9, wherein the trimming unit is carried by the housing.

14. A self-propelled robotic lawnmower according to claims 1-11, wherein the at least one trimming unit is coupled to a main driving unit.

15. A self-propelled robotic lawnmower according to claims 1-11, wherein the at least one trimming unit is coupled to an auxiliary driving unit.

16. A self-propelled robotic lawnmower according to claims 1-11, wherein the at least one trimming unit comprises at least one wire member.

17. A self-propelled robotic lawnmower according to claims 1-11, wherein the at least one trimming unit comprises at least one cutter blade.

18. A self-propelled robotic lawnmower according to claims 1-11, wherein the at least one trimming unit at least one reciprocal cutter.

19. A method for controlling a self-propelled robotic lawnmower which is configured to cut vegetation within a limited area during normal operation, the robotic lawnmower comprising a main cutting unit and at least one trimming unit, the method comprising the steps of:
mowing the lawnmower in a substantially straight line across the limited area;
in response to an external event:
randomly changing a direction of travel of the lawnmower; and
activating the at least one trimming unit.

20. A method for controlling a self-propelled robotic lawnmower according to claim 19, wherein the step of activating the at least one trimming unit comprises changing the at least one trimming unit from a passive state and to an active state.

21. A method for controlling a self-propelled robotic lawnmower according to claim 19 furthermore comprising the step of:
deactivating the at least one trimming unit in response to a deactivating event.

22. A method for controlling a self-propelled robotic lawnmower according to claim 21, wherein the step of deactivating the at least one trimming device comprises changing the at least one trimming unit from an active state and to a passive state.

23. A method for controlling a self-propelled robotic lawnmower according to claim 19-22, wherein the at least one trimming unit is in a passive state position, when in the passive state, and wherein the at least one trimming unit is in an active position when in the active state, and wherein the steps of activating and deactivating the at least one trimming unit comprises the step of moving the at least one trimming unit from the active position to the passive position and correspondingly from the passive position to the active position.

## Patentansprüche

1. Selbstangetriebener Rasenmähroboter (100), der dazu ausgebildet ist, die Vegetation innerhalb eines bestimmten Bereichs während des Normalbetriebs zu schneiden, wobei der Rasenmäher umfasst:
einen Körper (102), der durch ein Gehäuse abgedeckt wird;
eine Hauptschneideinheit (104), die von dem Körper getragen wird;
zumindest eine Trimmereinheit (106), die durch den Körper oder das Gehäuse getragen wird,
**dadurch gekennzeichnet, dass** die zumindest eine Trimmereinheit (106) so angeordnet ist, dass sie automatisch zwischen einem passiven Zustand im Normalbetrieb, in dem die Trimmereinheit passiv ist und daher nicht dazu angeordnet ist, einen Schnitt auszuführen, und einem aktiven Zustand, in dem die Trimmereinheit aktiv ist und daher dazu angeordnet ist, einen Schnitt auszuführen.

2. Selbstangetriebener Rasenmähroboter nach Anspruch 1, wobei die zumindest eine Trimmereinheit dazu angeordnet ist, automatisch zwischen einer passiven Stellung und einer aktiven Stellung beweglich zu sein, wobei die zumindest eine Trimmereinheit in dem passiven Zustand ist, wenn sie in der passiven Stellung ist, und wobei die zumindest eine Trimmereinheit in dem aktiven Zustand ist, wenn sie in der aktiven Stellung ist.

3. Selbstangetriebener Rasenmähroboter nach Anspruch 2, wobei in der passiven Stellung die zumindest eine Trimmereinheit zumindest teilweise innerhalb des Gehäuses angeordnet ist.

4. Selbstangetriebener Rasenmähroboter nach Anspruch 2, wobei in der aktiven Stellung die zumindest eine Trimmereinheit zumindest teilweise außerhalb des Gehäuses ausgefahren ist.

5. Selbstangetriebener Rasenmähroboter nach Anspruch 1, wobei in dem aktiven Zustand die zumindest eine Trimmereinheit dazu angeordnet ist, sich winkelförmig zu bewegen.

6. Selbstangetriebener Rasenmähroboter nach Anspruch 1, wobei in dem aktiven Zustand die zumindest eine Trimmereinheit dazu angeordnet ist, sich seitlich zu bewegen.

7. Selbstangetriebener Rasenmähroboter nach Anspruch 1, wobei in dem aktiven Zustand die zumindest eine Trimmereinheit dazu angeordnet ist, sich vertikal zu bewegen.

8. Selbstangetriebener Rasenmähroboter nach Anspruch 1, wobei der Rasenmäher dazu angeordnet ist, sich in einem zufälligen Muster innerhalb des begrenzten Bereichs zu bewegen.

9. Selbstangetriebener Rasenmähroboter nach Anspruch 2, wobei die zumindest eine Trimmereinheit selektiv in der aktiven Stellung ist, während der Rasenmäher sich in einem zufälligen Muster bewegt.

10. Selbstangetriebener Rasenmähroboter nach Anspruch 1, wobei der Rasenmäher dazu angeordnet ist, einen Umfangsdraht zu erfassen, und in Ansprechen darauf die Trimmereinheiten (IQ6) in den aktiven Zustand zu versetzen.

11. Selbstangetriebener Rasenmähroboter nach Anspruch 9, wobei die Trimmereinheit von der Hauptschneideinheit getragen wird.

12. Selbstangetriebener Rasenmähroboter nach Anspruch 9, wobei die Trimmereinheit von dem Körper getragen wird.

13. Selbstangetriebener Rasenmähroboter nach Anspruch 9, wobei die Trimmereinheit von dem Gehäuse getragen wird.

14. Selbstangetriebener Rasenmähroboter nach den Ansprüchen 1 bis 11, wobei die zumindest eine Trimmereinheit mit der Hauptschneideinheit gekoppelt ist.

15. Selbstangetriebener Rasenmähroboter nach den Ansprüchen 1 bis 11, wobei die zumindest eine Trimmereinheit mit einer Zusatzschneideinheit gekoppelt ist.

16. Selbstangetriebener Rasenmähroboter nach den Ansprüchen 1 bis 11, wobei die zumindest eine Trimmereinheit zumindest ein Drahtelement umfasst.

17. Selbstangetriebener Rasenmähroboter nach den Ansprüchen 1 bis 11, wobei die zumindest eine Trimmereinheit zumindest eine Schneidklinge umfasst.

18. Selbstangetriebener Rasenmähroboter nach den Ansprüchen 1 bis 11, wobei die zumindest eine Trimmereinheit zumindest einen Zweiseitenschneider umfasst.

19. Verfahren zur Steuerung eines selbstangetriebenen Rasenmähroboters, der dazu ausgebildet ist, die Vegetation innerhalb eines bestimmten Bereichs während des Normalbetriebs zu schneiden, wobei der Rasenmähroboter eine Hauptschneideinheit und zumindest eine Trimmereinheit umfasst, wobei das Verfahren die folgenden Schritte umfasst:
Bewegen des Rasenmähers in einer im Wesentlichen geraden Linie über den begrenzten Bereich;
in Ansprechen auf ein äußeres Ereignis:
zufälliges Verändern einer Fahrtrichtung des Rasenmähers;
und
Aktivieren der zumindest einen Trimmereinheit.

20. Verfahren zur Steuerung eines selbstangetriebenen Rasenmähroboters nach Anspruch 19, wobei der Schritt des Aktivierens der zumindest einen Trimmereinheit das Wechseln der zumindest einen Trimmereinheit aus einem passiven Zustand in einen aktiven Zustand umfasst.

21. Verfahren zur Steuerung eines selbstangetriebenen Rasenmähroboters nach Anspruch 19, des Weiteren umfassend die folgenden Schritte:
Deaktivieren der zumindest einen Trimmereinheit in Ansprechen auf ein Deaktivierungsereignis.

22. Verfahren zur Steuerung eines selbstangetriebenen Rasenmähroboters nach Anspruch 21, wobei der Schritt des Deaktivierens der zumindest einen Trimmereinrichtung das Wechseln der zumindest einen Trimmereinheit aus einem aktiven Zustand in einen passiven Zustand umfasst. '

23. Verfahren zur Steuerung eines selbstangetriebenen Rasenmähroboters nach Anspruch 19 bis 22, wobei die zumindest eine Trimmereinheit in einer passiven Stellung ist, wenn sie in einem passiven Zustand ist, und wobei die zumindest eine Trimmereinheit in einer aktiven Stellung ist, wenn sie in einem aktiven Zustand ist, und wobei die Schritte des Aktivierens und Deaktivierens der zumindest einen Trimmereinheit den Schritt des Bewegens der zumindest einen Trimmereinheit aus der aktiven Stellung in die passive Stellung und entsprechend aus der passiven Stellung in die aktive Stellung ist.

## Revendications

1. Tondeuse à gazon robotisée automotrice (100) qui est configurée pour couper une végétation dans une zone limitée pendant un fonctionnement normal, la tondeuse à gazon comprenant :
un corps (102) recouvert d'un boîtier ;
une unité de coupe principale (104) portée par le corps ;
au moins une unité de taille (106) portée par le corps ou le boîtier,
**caractérisée en ce que** l'au moins une unité de coupe (106) est agencée de manière à changer automatiquement entre un état passif pendant un fonctionnement normal, dans lequel l'unité de taille est passive et n'est donc pas agencée pour effectuer une coupe quelconque, et un état actif, dans lequel l'unité de taille est active et ainsi agencée pour effectuer une coupe.

2. Tondeuse à gazon robotisée automotrice selon la revendication 1, dans laquelle l'au moins une unité de taille est agencée de manière à être automatiquement mobile entre une position passive et une position active, dans laquelle l'au moins une unité de taille est à l'état passif lorsqu'elle est dans la position passive, et dans laquelle l'au moins une unité de taille est à l'état actif lorsqu'elle est dans la position active.

3. Tondeuse à gazon robotisée automotrice selon la revendication 2, dans laquelle dans la position passive l'au moins une unité de taille est disposée au moins partiellement à l'intérieur du boîtier.

4. Tondeuse à gazon robotisée automotrice selon la revendication 2, dans laquelle dans la position active l'au moins une unité de taille est étendue au moins partiellement à l'extérieur du boîtier.

5. Tondeuse à gazon robotisée automotrice selon la revendication 1, dans laquelle à l'état actif l'au moins une unité de taille est agencée pour se déplacer angulairement.

6. Tondeuse à gazon robotisée automotrice selon la revendication 1, dans laquelle à l'état actif l'au moins une unité de taille est agencée pour se déplacer latéralement.

7. Tondeuse à gazon robotisée automotrice selon la revendication 1, dans laquelle à l'état actif l'au moins une unité de taille est agencée pour se déplacer verticalement.

8. Tondeuse à gazon robotisée automotrice selon la revendication 1, dans laquelle la tondeuse à gazon est agencée pour se déplacer selon un motif aléatoire dans la zone limitée.

9. Tondeuse à gazon robotisée automotrice selon la revendication 2, dans laquelle l'au moins une unité de taille est sélectivement dans la position active pendant que la tondeuse à gazon se déplace selon un motif aléatoire.

10. Tondeuse à gazon robotisée automotrice selon la revendication 1, dans laquelle la tondeuse à gazon est agencée pour détecter un fil de périmètre, et en réponse à cela, met les unités de taille (106) à l'état actif.

11. Tondeuse à gazon robotisée automotrice selon la revendication 9, dans laquelle l'unité de taille est portée par l'unité de coupe principale.

12. Tondeuse à gazon robotisée automotrice selon la revendication 9, dans laquelle l'unité de taille est portée par le corps.

13. Tondeuse à gazon robotisée automotrice selon la revendication 9, dans laquelle l'unité de taille est portée par le boîtier.

14. Tondeuse à gazon robotisée automotrice selon les revendications 1 à 11, dans laquelle l'au moins une unité de taille est couplée à une unité d'entraînement principale.

15. Tondeuse à gazon robotisée automotrice selon les revendications 1 à 11, dans laquelle l'au moins une unité de taille est couplée à une unité d'entraînement auxiliaire.

16. Tondeuse à gazon robotisée automotrice selon les revendications 1 à 11, dans laquelle l'au moins une unité de taille comprend au moins un élément de fil.

17. Tondeuse à gazon robotisée automotrice selon les revendications 1 à 11, dans laquelle l'au moins une unité de taille comprend au moins une lame de coupe.

18. Tondeuse à gazon robotisée automotrice selon les revendications 1 à 11, dans laquelle l'au moins une unité de taille comprend au moins un dispositif de coupe à mouvement alternatif.

19. Procédé de commande d'une tondeuse robotisée automotrice qui est configurée pour couper une végétation dans une zone limitée pendant un fonctionnement normal, la tondeuse à gazon robotisée comprenant une unité de coupe principale et au moins une unité de taille, le procédé comprenant les étapes consistant :
à tondre par l'intermédiaire de la tondeuse à gazon selon une ligne sensiblement droite à travers la zone limitée ;
en réponse à un événement externe :
à changer aléatoirement une direction de déplacement de la tondeuse à gazon ; et
à activer l'au moins une unité de taille.

20. Procédé de commande d'une tondeuse à gazon robotisée automotrice selon la revendication 19, dans lequel l'étape d'activation de l'au moins une unité de taille comprend le fait de faire passer l'au moins une unité d'entraînement d'un état passif et à un état actif.

21. Procédé de commande d'une tondeuse à gazon robotisée automotrice selon la revendication 19, comprenant en outre l'étape consistant :
à désactiver l'au moins une unité de taille en réponse à un événement de désactivation.

22. Procédé de commande d'une tondeuse à gazon robotisée automotrice selon la revendication 21, dans lequel l'étape de désactivation de l'au moins un dispositif de taille comprend le fait de faire passe l'au moins une unité de taille d'un état actif et à un état passif.

23. Procédé de commande d'une tondeuse à gazon robotisée automotrice selon les revendications 19 à 22, dans lequel l'au moins une unité de taille est dans une position d'état passif, lorsqu'elle est à l'état passif, et dans lequel l'au moins une unité de taille est dans une position active lorsqu'elle est à l'état actif, et dans lequel les étapes d'activation et de désactivation de l'au moins une unité de taille comprennent l'étape consistant à déplacer l'au moins une unité de taille de la position active à la position passive et, de manière correspondante, de la position passive à la position active.
